# EUROPÄISCHE PATENTSCHRIFT

(11) **EP 1 076 239 B1**
(45) Veröffentlichungstag und Bekanntmachung des Hinweises auf die Patenterteilung: **24.09.2003**
(21) Anmeldenummer: 00116757.6
(22) Anmeldetag: 03.08.2000
(51) Int. Cl.: G01N 27/447

(54) **Verfahren zur Beschichtung von Kapillaren mit quervernetzten hydrophilen Polymeren**
Process for the coating of capillaries with cross-linked hydrophilic polymers
Procédé pour le revêtement des capillaires avec des polymères hydrophiles réticulés

(30) Priorität: 11.08.1999 DE 19938002
(43) Veröffentlichungstag der Anmeldung: 14.02.2001
(73) Patentinhaber: Studiengesellschaft Kohle mbH, 45470 Mülheim an der Ruhr (DE)
(72) Erfinder: Belder, Detlev, Dr., 45470 Mülheim/Ruhr (DE); Husmann, Heribert, 45470 Mülheim/Ruhr (DE)
(74) Vertreter: von Kreisler, Alek, Dipl.-Chem.

(56) Entgegenhaltungen:
- EP-A- 0 587 156
- WO-A-96/23221
- WO-A-99/20378
- US-A- 4 796 700
- US-A- 5 322 608

## Beschreibung

Gegenstand der Erfindung ist ein Verfahren zur permanenten Beschichtung der inneren Oberfläche von Säulen, Kapillaren und Mikrokanalsystemen mit hydroxylischen Polymeren. Die Innenbeschichtung erfolgt durch Behandlung der zu belegenden Oberfläche mit der Lösung eines quervernetzenden Reagenz und der Lösung des Polymeren, was zu einer Immobilisierung des Polymers an der Kapillaroberfläche führt. Das beschriebene Verfahren ist besonders geeignet zur Beschichtung von fused-silica (FS) Kapillaren und Systemen mit mikrofluidischen Strukturen für die Kapillarelektrophorese mit einem stark hydrophilen Polymer wie Polyvinylalkohol. Weiterer Gegenstand der Erfindung sind die so hergestellten Säulen und Kapillaren, sowie deren Anwendung in der Kapillarelektrophorese und verwandten Techniken.

### Hintergrund

Mit Methoden der Kapillarelektrophorese (CE) können Trennungen von Gemischen unterschiedlicher Verbindungen durch differentielle Migration der Analyten in einem elektrischen Feld erhalten werden. Die Trennungen werden in der Regel in Kapillaren aus fused-silica, dies ist hochreines Quarzglas, die mit einem zumeist wäßrigen Elektrolyten gefüllt sind, durchgeführt. Die inneren Oberflächen derartiger Kapillaren haben folgende Eigenschaften in ihrer Anwendung in der Kapillarelektrophorese:
- Aufgrund der aziden Silanolgruppen des FS-materials ist ein vom pH-Wert des Elektrolyten abhängiger elektroosmotischer Fluß (EOF) in Richtung zur Kathode wirksam. Der Betrag des EOF kann in unbelegten FS-Kapillaren jedoch stark schwanken und verschlechtert dadurch maßgeblich die Präzision und Reproduzierbarkeit von Analysen in der Kapillarelektrophorese.
- Die FS-Oberflächen verhalten sich sehr adsorptiv gegenüber vielen Verbindungen. Insbesondere basische Verbindungen und große Biopolymere, wie Proteine werden aus wäßrigen Lösungen stark adsorbiert. Dies verschlechtert die Qualität und Auflösung einer kapillarelektrophoretische Trennung solcher Verbindungen erheblich bzw. kann diese sogar unmöglich werden lassen.

Die Eigenschaften solcher Kapillaren können gezielt verändert werden, wenn die Kapillaroberfläche mit einer geeigneten Beschichtung versehen wird. Beschichtete FS-Kapillaren werden in der Kapillarelektrophorese aus folgenden Gründen eingesetzt:
- Zur Manipulation des elektroosmotischen Flusses: Durch Beschichtung der Oberfläche kann sowohl der Betrag, als auch die Richtung des EOF verändert werden. Dadurch kann eine CE-Trennung bezüglich Auflösung und Analysenzeit optimiert werden. Die Konstanz des EOF ist in beschichteten Kapillaren zumeist gröβer als in unbehandelten FS-Kapillaren mit der Folge verbesserter Reproduzierbarkeit und Wiederholbarkeit von CE-Analysen.
- Zur Unterdrückung der Wechselwirkungen zwischen Analyt und Wand werden Beschichtungen eingesetzt, die gegenüber den zu untersuchenden Verbindungen eine geringe Adsorptivität aufweisen. Dadurch werden höhere Trenneffizienzen adsorptiver Verbindungen, wie z.B. Proteine, und damit eine bessere Auflösung in kapillarelektrophoretischen Trennungen erreicht.

Eine geeignete innere Beschichtung von Kapillaren für die CE sollte folgende Eigenschaften besitzen: i) einen konstanten EOF über einen weiten pH-Bereich, ii) Langzeitstabilität gegenüber unterschiedlichen Elektrolyten, iii) die Adsorptivität der Beschichtung gegenüber einer Vielfalt von Analyten sollte möglichst gering sein.

FS-Kapillaren lassen sich sehr leicht mit kationischen Polymeren wie Polybren® oder Polyvinylamin [M. Chiari, L. Ceriotti, G. Crini, und M. Morcellet; J. Chromatogr. A 836 (1999) 81] belegen, da diese stark an den entgegengesetzt geladenen FS-Oberflächen adsorbiert werden. Diese Kapillaren sind, wegen des umgekehrten, anodischen EOF, besonders zur beschleunigten Analyse sehr mobiler Anionen geeignet.

Die Verwendung von hydrophilen nicht-ionischen Kapillarinnenbeschichtungen wie Polyacrylamid- oder Polyethylenglykol-Coatings hat sich in der Kapillarelektrophorese als besonders geeignet erwiesen, da diese Beschichtungen sowohl den EOF deutlich reduzieren, als auch die Adsorption von basischen Verbindungen und insbesondere von Proteinen an der Kapillarwand unterdrücken. Es wurden verschiedene Verfahren entwickelt, um hydrophile Moleküle, zumeist nach vorhergehender Silanisierung, chemisch an die FS-Kapillaroberfläche zu binden ( S. Hjerten; J. Chromatogr. 347 (1985) 191; G.M. Bruin, J.P. Chang; R.H. Kuhlmann, K. Zegers, J.C. Kraak und H. Poppe; J. Chromatogr. 471 (1989) 429; K.A. Cobb, V. Dolnik und M. Novotny; Anal. Chem. 62 (1990) 2478; A. Malik, Z. Zhao und M.L. Lee; J. Microcol. Sep. 5, (1993) 119).

Unter allen in der Literatur beschriebenen Kapillarbeschichtungen haben sich diejenigen auf Polyvinylalkohol (PVA) -Basis, welches als das hydrophilste Polymer anzusehen ist, als besonders leistungsfähig erwiesen. In Kapillaren, die mit PVA beschichtetet wurden, konnten insbesondere für Proteine außerordentlich hohe Trenneffizienzen erzielt werden. Zudem ist der Elektroosmotische Fluß über einen weiten pH-Bereich unterdrückt und sehr stabil (M. Gilges, H. Kleemiß und G. Schomburg; Anal. Chem. 66 (1994) 2038).

### Stand der Technik

Die Herstellung von mit Polyvinylalkohol beschichteten Kapillaren ist mit herkömmlichen Verfahren relativ schwierig durchzuführen. Dies ist in den besonderen Eigenschaften des Polyvinylalkohols begründet: i) Polyvinylalkohol ist nur in Wasser löslich, daher sind klassische chemische Reaktionen in organischen Lösungsmitteln zur Fixierung des Polymers an die Kapillaroberfläche, wie z.B. durch Silanisierung, nicht möglich. ii) Wäßrige Lösungen von Polyvinylalkohol benetzen wegen ihrer starken Hydrophilie die fused-silica Kapillaren nur schlecht; daher ist es schwierig, allein durch Adsorption, homogene Filme von Polyvinylalkohol auf den Kapillaroberflächen zu erzeugen. Bisher sind folgende Verfahren beschrieben worden, um PVA-beschichtete Kapillaren zu erzeugen:
1) Gilges und Schomburg (M. Gilges, H. Kleemiß und G. Schomburg; Anal. Chem. 66 (1994) 2038; DE 42 30 403 A1) haben durch Adsorption von Polyvinylalkohol aus einer wäßrigen Lösung an die fused-silica Oberfläche einen PVA-Film auf die Kapillarwand aufgebracht. Dazu wurde eine mit der PVA-Lösung gefüllte Kapillare sehr langsam im Stickstoffstrom mittels Überdruck entleert. Nur durch vorsichtige und sehr langsame Entleerung konnte trotz der schlechten Benetzung der Oberfläche mit der Polymerlösung ein homogener Polymerflim auf der Oberfläche erzeugt werden. In der Originalpublikation (Anal. Chem. 66 (1994) 2038) wurde zur kontrollierten Entleerung eine Drosselkapillare an die zu belegende Kapillare angekoppelt.
   Die Immobilisierung des zunächst wasserlöslichen Polymerfilms wurde dann durch Erhitzen im Gasstrom realisiert. Dadurch wird Polyvinylalkohol in einen pseudokristallinen Zustand überführt und damit wasserunlöslich.
   Mit diesem Verfahren konnten ohne aufwendige mehrstufige chemische Reaktionen stabile Polyvinylalkohol-Beschichtungen auf die Kapillaren aufgebracht werden. Da bei diesem Verfahren der Polymerfilm aber aus einer Polymerlösung aufgebracht wird, welche die FS-Wand nur sehr schlecht benetzt, ist dieser Teil des Verfahrens sehr fehleranfällig.
2) Shieh (US 5,605,613) konnte PVA-beschichtete Kapillaren in einem mehrstufigen Prozeß herstellen. Dazu wurde zunächst eine hydrophobe Zwischenschicht über Si-O-Si-Bindungen an die FS-Oberfläche gebunden. Als bevorzugtes Reagenz wurde Polybutadienyltriethoxysilan genannt. Danach wird das Monomer Vinylacetat über die Vinylfunktion mittels radikalischer Polymerisation an diese Schicht gebunden. Anschließend wird das kovalent an die Zwischenschicht gebundene Polyvinylacetat hydrolysiert und damit zu Polyvinylalkohol umgesetzt.
   Die von Shieh beschriebene Prozedur basiert auf einer langwierigen mehrstufigen Reaktion. Der erste Schritt basiert auf einer Silanolderivatisierung und ist daher stark abhängig von der Silanolgruppenkonzentration an der FS-Oberfläche und damit vom jeweiligen Herstellungsprozeß der Kapillare und/oder von der gewählten Vorbehandlung der Kapillare.
3) Das von Karger beschriebene Verfahren (US 5,840388) ist dem von Shieh beschriebenen sehr ähnlich. Auch hier wird zunächst in organischen Solventien mittels Silanisierungsreaktion eine mit dem Monomer Vinylacetat reagierende Zwischenschicht über Si-O-Si -Bindungen aufgebracht, vorzugsweise mit Vinyltrimethoxysilan. Wie bei Shieh wird dann, in einer radikalischen Copolymerisationsreaktion der Zwischenschicht mit Vinylacetat, kovalent gebundenes Polyvinylacetat erzeugt. Nach Hydrolyse wird dann analog zu Shieh kovalent zur Quarzoberfläche gebundenes Polyvinylalkohol erhalten.

### Gegenstand der Erfindung

Zielsetzung der Erfindung war ein schnelles und zuverlässiges Verfahren zur Belegung von Kapillaren mit hydroxylischen Polymeren, vorzugsweise mit Polyvinylalkohol, und deren Anwendung in elektromigrativen Trennverfahren.

Diese Zielsetzung einer permanenten Polymerbeschichtung einer Kapillare, vorzugsweise mit Polyvinylalkohol, wird erreicht, indem das gelöste Polymer während des Belegungsvorganges chemisch vernetzt und an der Kapillarwand immobilisiert wird. Dazu wird ein gelöstes bi- oder multifunktionelles Reagenz, vorzugsweise ein Dialdehyd, wie z.B. Glutaraldehyd, in die Kapillare überführt. Danach wird ein Pfropfen der Polymerlösung, vorzugsweise eine Polyhydroxyverbindung, wie z.B. Polyvinylalkohol, z. B. mit Hilfe eines unter Überdruck stehenden Gases, wie Stickstoff oder andere laborübliche Gase, z. B. Helium, Argon, Wasserstoff, oder mit Hilfe eines Quecksilberpfropfes durch die Kapillare gedrückt. Die zwischen der Polymerlösung und dem Vernetzer eintretende Reaktion ermöglicht eine gute Benetzung der Kapillarwand mit der Polymerlösung und immobilisiert gleichzeitig die entstehende Polymerschicht auf der Kapillarwand. Die so erzeugten sehr stabilen Polymerbeschichtungen sind sofort nach Trocknung durch weiteres Spülen mit Gas einsatzfähig und zeigen folgende Eigenschaften in der Kapillarelektrophorese: unterdrückter EOF sowohl im sauren und als auch im alkalischen pH-Bereich, sehr hohe Trenneffizienzen für adsorptive Analyten wie basische Proteine, Langzeitstabilität bei Verwendung wäßriger und nicht wäßriger Elektrolyte, Beständigkeit gegenüber stark sauren und alkalischen Spüllösungen, wie verdünnte HCL- oder NaOH-Lösungen.

Mit diesem Verfahren ist es möglich sehr schnell und mit großer Zuverlässigkeit PVA beschichtete Kapillaren hoher Qualität herzustellen. Der Beschichtungsvorgang dauert wenige Minuten, das Trocknen der Kapillaren erfolgt im Stickstoffstrom über mehrere Stunden. Die Trocknungszeit kann durch Erhöhung der Temperatur signifikant verkürzt werden, so daß die Kapillaren in weniger als einer Stunde verfügbar sein können.

Kapillaren, die entsprechend unserem Verfahren mit PVA und Glutaraldehyd als Vernetzer belegt werden, sind im Vergleich zum analogen Verfahren ohne Vernetzer (mit ausschließlich thermischer Immobilisierung), vgl. EP-A-0 587 156, wesentlich zuverlässiger herzustellen. In Abb. 1 sind die in CE-Trennungen erreichbaren Trenneffizienzen basischer Proteine für verschiedene nacheinander hergestellte Kapillaren dargestellt. Wird Glutaraldehyd als Vernetzer eingesetzt, so können in über 80 % der hergestellten Kapillaren sehr hohe Trenneffizienzen (N> 400.000) für das stark basische Protein Cytochrom C erhalten werden.
Wird die Beschichtung jedoch ohne den Vernetzer durchgeführt, werden nur in 20 % der hergestellten Kapillaren Trenneffizienzen N größer 400.000 erhalten. Bei 30% Prozent der so hergestellten Kapillaren (Nr. 1, 5, 12, 15) kann für das stark adsorptive Protein kein Signal erhalten werden, es wurde wie an unbelegten Kapillaren irreversibel adsorbiert.

Mit unserem Verfahren lassen sich neben klassischen Kapillaren auch Oberflächen von Systemen mit mikrofluidischen Strukturen, wie z.B. von Mikrokanälen eines Kapillarelektrophorese Chips (CE-Chips) beschichten. Damit wird es möglich den elektroosmotischen Fluß in CE-Chips zu unterdrücken, sowie die Adsorption von Analyten wie z.B. Proteinen zu unterbinden. Durch gezielte Beschichtung einzelner Mikrokanäle eines komplexeren Systems, während andere unbeschichtet bleiben, lassen sich elektroosmotisch induzierte Flüssigkeitsströmungen in Netzwerken von Mikrokanälen gezielt manipulieren. So gelingt es für CE-Chips mit gekreuzten Mikrokanälen, nur den für die Trennung relevanten Hauptkanal zu beschichten und so die Analyse adsorptiver Proteine zu ermöglichen, während der Injektionskanal unbeschichtet bleibt und eine elektroosmotische Injektion in Richtung zur Kathode ermöglicht.
Unser Verfahren zur Herstellung polymerbeschichteter Kapillaren zeichnet sich durch folgende Eigenschaften aus:
- Da das Verfahren auf chemischer Vernetzung des Polymers beruht, eine chemische Bindung des Polymers an die Kapillarwand nicht erforderlich ist, kann es auf unterschiedlichste Kapillarmaterialien angewandt werden, wie z. B. Glas, "fused silica", unterschiedliche Kunststoffe, wie Teflon, PEEK, Polyacrylate, und ist auch für unterschiedlich strukturierte Kanäle, wie z. B. klassische runde Kapillaren, (recht)-eckige Kanäle/Kapillaren und Mikrokanäle in mikrofluidischen Systemen (wie z.B. in CE-Chips) anwendbar.
- Das Verfahren ist einfach durchzuführen.
- Das Verfahren ist sehr schnell.
- Die erhaltenen Kapillaren lassen sich wiederhclbar mit sehr hoher Qualität herstellen (geringer Ausschuß).

Die nach diesem Verfahren hergestellten beschichteten Kapillaren haben folgende Eigenschaften:
- Sie sind wiederholt für Trennungen einsetzbar.
- Sie erlauben CE-Trennungen stark adsorptiver Verbindungen wie Proteine sowohl in sauren, als auch neutralen und alkalischen Elektrolyten.
- Der Elektroosmotische Fluß ist über einen weiten pH-Bereich, mindestens von pH 2 bis pH 10, stark reduziert und von hoher Konstanz.
- Die chemisch immobilisierten PVA-Beschichtungen erweisen sich als stabil unter den Bedingungen der CE.
- Die Kapillaren sind insbesondere für folgende Anwendungen geeignet: CE-Trennungen basischer und azider Verbindungen, Kapillargelelektrophorese, isoelektrische Fokussierung, CE-Trennungen mit sehr geringen Ionenstärken des Elektrolyten und CE-Trennungen mit organischen Lösungsmitteln als Elektrolyte, wie zur Kopplung von Kapillarelektrophorese mit der Massenspektrometrie.
- Die erfindungsgemäß hergestellten Kapillaren und mikrofluidischen Systeme können u. a. zur Dosierung von zu analysierenden Proben z. B. in der Massenspektrometrie und für mikrosynthetische Verfahren in der Chemie eingesetzt werden.

### Beispiel 1:

### Belegung einer Kapillare mit PVA mit thermischer Nachbehandlung

Um eine für die Kapillarelektrophorese geeignete Trennsäule herzustellen, wurde für die nachfolgende Beschichtung eine handelsübliche "fused-silica" Kapillare von 50 µm Innendurchmesser und 75 cm Länge (Hersteller: Poly-Micro, Phoenix, Arizona, USA ) mit einer Beschichtungsapparatur verbunden. Anschließend wurde eine Glutaraldehydlösung (200 pL einer 50%igen wäßrigen Lösung mit 300 µl einer 1:10 verdünnten konz. HCl gemischt) mit 0,5. MPa Stickstoff für 5 Sekunden in die Säule gedrückt. Unmittelbar danach wurde eine PVA-Lösung (450µL einer 5%igen wäßrigen PVA-Lösung mit 50 µl einer 1:1 mit H₂O verdünnten HCl gemischt), (PVA: MW ca. 90 000, 99+% hydrolysiert, Aldrich) mit 0,5 MPa für 10 Sekunden in die Säule gedrückt. Beide Flüssigkeitspfropfen wurden anschließend mit 0,5 MPa weiter durch die Säule transportiert. Nach 1-2 Minuten hatten sie die Säule verlassen und die entstandene Schicht wurde für 10 Minuten im Stickstoffstrom vorgetrocknet. Danach wurde zur beschleunigten Trocknung die Kapillare in einen heizbaren Ofen (Gaschromatographen) eingebaut und mit dem Injektor verbunden. Während man die Säule im Stickstoffstrom (0,15 - 0,20 MPa) spülte, wurde der Ofen von 40°C bis 160°C mit 6°C/min. aufgeheizt. Nach Abkühlen und Ausbau der Säule war sie für den Gebrauch fertig. Vor der Verwendung in einem CE-Gerät wurde an der entsprechenden Stelle durch Abschaben der äußeren Polyimidschicht ein UV- durchlässiges Fenster in der Kapillare erzeugt und diese durch Kürzen der Säule vorne und hinten um jeweils ca. 10 cm auf die gewünschte Länge gebracht.

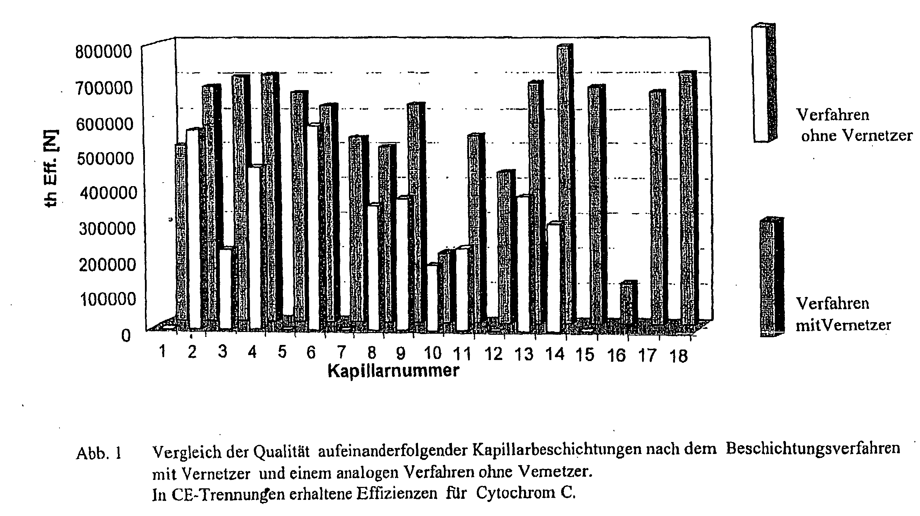

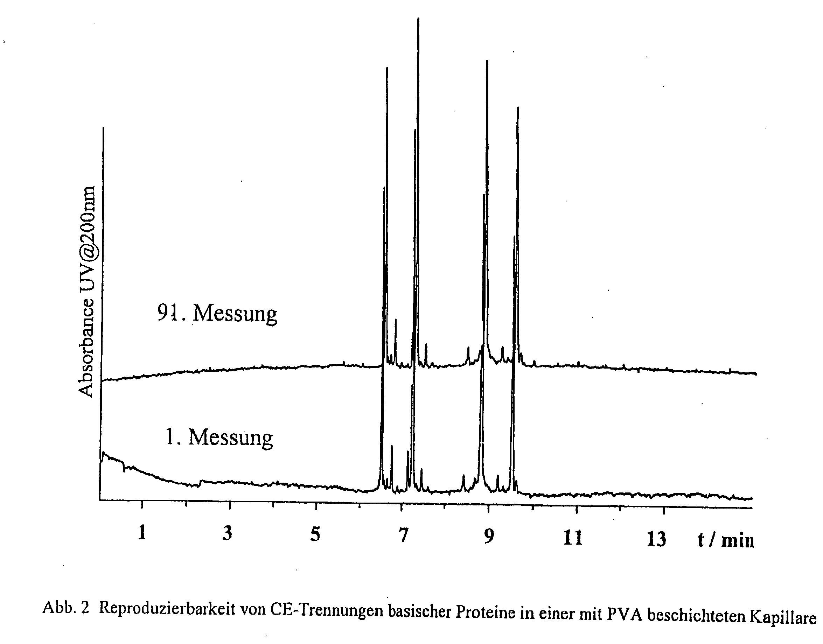

In einer nach dem oben beschriebenen Verfahren hergestellten Kapillare der effektiven Länge: 40,5 cm der Gesamtlänge 54 cm und einem Innendurchmesser von 50 µm wurde eine Mischung folgender Proteine mehrfach analysiert: Cytochrom C, Lysozym Trypsinogen und a -Chymotripsinogen. Die Trennung erfolgte in einem wäßrigen Phosphatpuffer der Konzentration 40 mMol L⁻¹ bei pH 3 und einer Spannung von 20 kV. In Abb. 2 sind die erste und die 91-te erhaltene Trennung übereinander geplottet. Es ist zu erkennen, daß mit diesen Kapillaren sehr gute, reproduzierbare Trennungen erhalten werden.

### Beispiel 2:

### PVA-Kapillaren ohne thermische Nachbehandlung

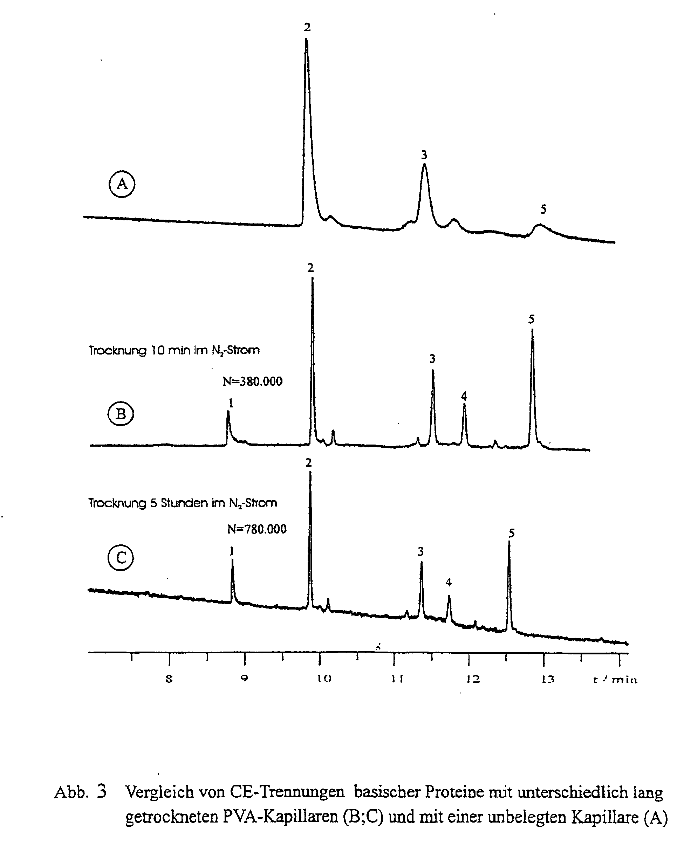

Zwei Kapillaren wurden analog zu Beispiel 1 mit PVA belegt, jedoch ohne nachfolgende thermische Behandlung . Es wurden 2 frisch gecoatete Kapillaren unterschiedlich lang im Stickstoffstrom getrocknet und die erhaltenen Kapillaren dann für den Einsatz in der Kapillarelektrophorese analog zu Beispiel 1 getestet. Die Testmischung bestand aus basischen Proteinen: (1) Cytochrom C, (2) Lysozym, (3) Trypsin, (4) Trypsinogen und (5) a - Chymotripsinogen. Die erhaltenen Elektropherogramme und der Vergleich mit einer Trennung, die in einer unbelegten Kapillare erhalten wird ist in Abb. 3 dargestellt. In einer unbelegten Kapillare können wegen der starken Adsorption der Proteine keine effizienten Trennungen erhalten werden, das stark adsorptive Protein Cytochrom C wird sogar vollständig adsobiert und eluiert nicht aus der Säule, siehe Abb. 3A. Mit einer nach unserem Verfahren hergestellten PVA-Kapillare werden hocheffiziente Signale aller Testverbindungen erhalten. Wird die Trocknung der PVA-Beschichtung im Gasstrom durchgeführt, so werden nach dem Trocknen der Beschichtung über 5 Stunden stabile und sehr effiziente Säulen erhalten. Wird nur für 10 Minuten im Gasstrom getrocknet, so sind die Trenneffizienzen N (in theoretischen Bodenzahlen) für stark adsorptive Verbindungen wie Cytochrom C geringer.

### Beispiel 3:

### Kapillarelektrophoretische Trennung basischer Dendrimere

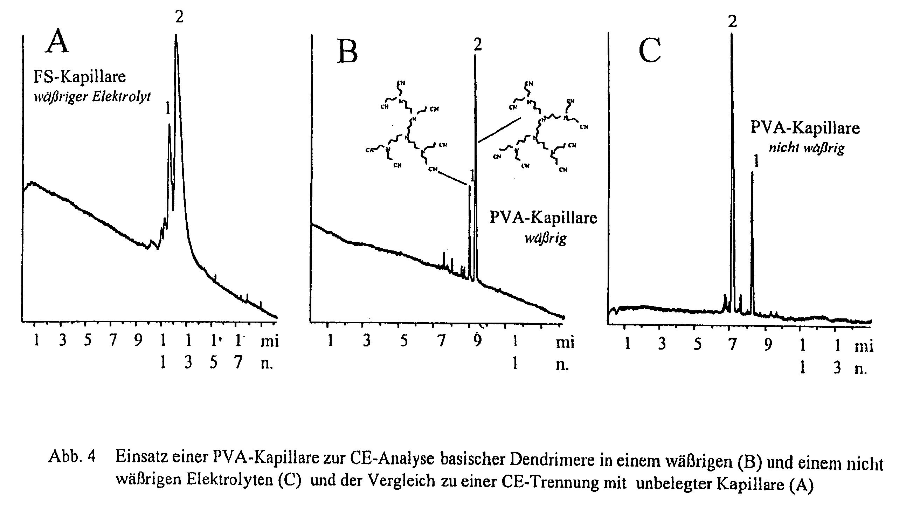

Mit einer Analog zu Beispiel 1 hergestellten Kapillare wurden basische Dendrimere analysiert. Diese Verbindungen sind sehr adsorptiv gegenüber fused-silica. Mit einer unbelegten Kapillare kann wegen der Peakverbreiterung der adsorbierten Analyten daher nur eine schlechte CE-Trennung erhalten werden, siehe Abb. 4A. Wird die Trennung mit gleichen experimentellen Parametern aber mit einer PVA beschichteten Kapillare durchgeführt wird die Adsorption der Verbindungen an der Kapillarwand wirksam unterdrückt und es werden sehr scharfe Signale erhalten. Dies ist in Abb. 4B gezeigt.

PVA-Kapillaren können auch mit Elektrolyten betrieben werden, die sehr hohe Anteile organischer Lösungsmittel enthalten, dies ist insbesondere zur Kopplung der CE mit einem Massenspektrometer (MS) notwendig. Die CE Trennung von Dendrimeren in einem zum MS kompatiblen Elektrolyten ist in Abb. 4C dargestellt.

### Experimentelle Bedingungen:

Analytkonzentration: 1mg/ml, Spannung: 15 kV, Detektion: UV 200 nm, Elektrolyte: A,B: 40 mML⁻¹ Na- Phosphat, C: 45% Methanol, 10 % Wasser, 45% Acetonitril, 20 mMol L⁻¹ Ammoniumacetat.

### Beispiel 4:

### Unterdrückung des EOF über einen weiten pH-Bereich

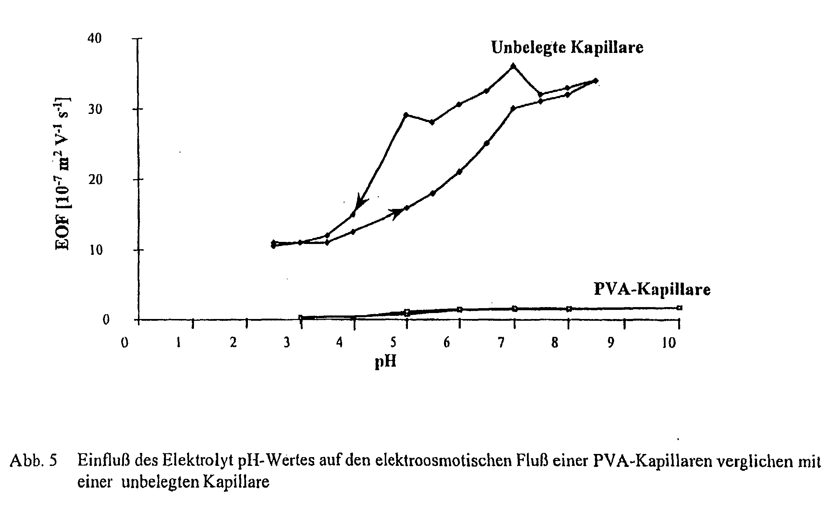

Mit einer analog zu Beispiel 1 hergestellten Kapillare wurde die Abhängigkeit des elektroosmotischen Flusses vom pH-Wert eines wäßrigen Elektrolyten bestimmt. Dazu wurden Na-Phosphatpuffer auf die entsprechenden pH-Werte titriert; der elektroosmotische Fluß wurde aus der Migrationszeit des neutralen Markers DMSO bestimmt. Die für eine PVA-Kapillare erhaltenen Ergebnisse sind in Abb. 5 mit den entsprechenden Ergebnissen für eine unbelegte Kapillare verglichen. In einer nach unserem Verfahren mit PVA belegten Kapillare ist der EOF über einen weiten pH-Bereich unterdrückt und ist, im Gegensatz zu unbelegten Kapillaren, nahezu unabhängig vom pH-Wert.

### Beispiel 5:

### Belegung der Mikrokanäle eines CE-Chips

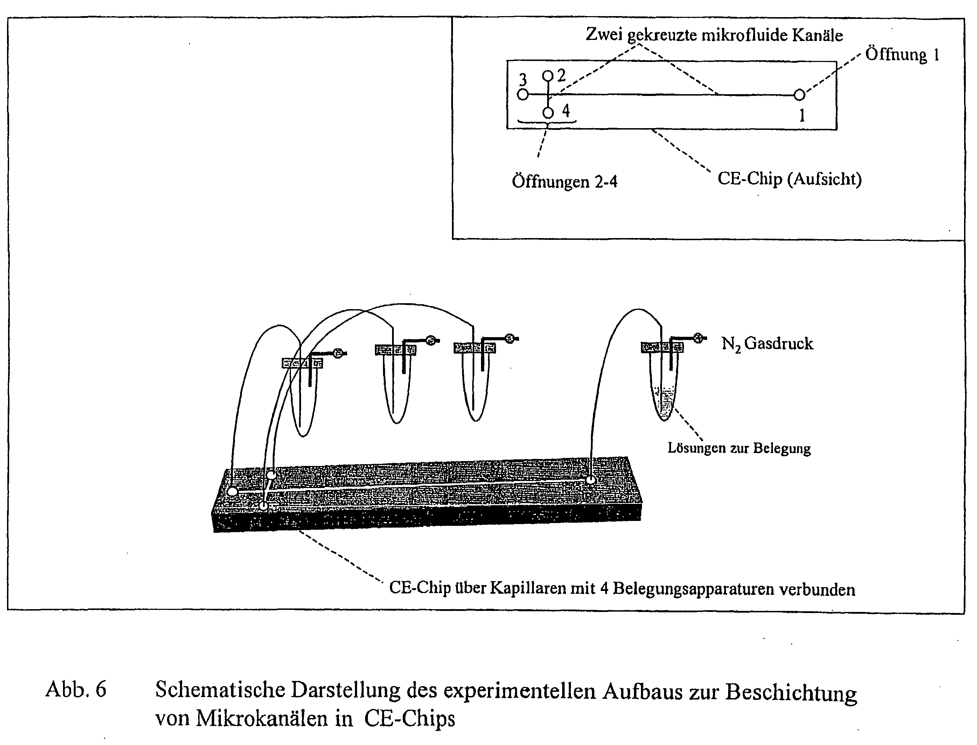

Ein CE-Chip aus Borofloatglas mit mikrofluidischen Kanälen (20 µm Tiefe, 50 µm Breite, Länge des Injektionskanals 8 mm, Länge des Hauptkanals 85 mm) der Firma Micralyne (Edmonton, Kanada), wurde gemäß unseres Verfahrens mit PVA belegt. Dazu wurde der Chip in einer Halterung mit Dichtungen plaziert und alle 4 Öffnungen mit jeweils einer Belegungsapparatur über Kapillaren gasdicht verbunden. Dies ist schematisch in Abbildung 6 gezeigt. Mit Hilfe der Belegungsapparaturen können Flüssigkeiten und Gase durch die mikrofluidischen Strukturen des Chips mittels Druck bewegt werden.

Zur Belegung aller Kanäle im Chip wurden zunächst die Kanäle im Chip vollständig mit Wasser gefüllt. Danach wurde eine Glutaraldehydlösung (200 µL einer 50%igen wäßrigen Lösung mit 300 µl einer 1:10 verdünnten konz. HCl gemischt) mit 0,5 MPa Stickstoff über eine fused silica Kapillare (Innendurchmesser 50 µm, Länge 30 cm), in die Öffnung 1 des Mikrochips gedrückt, während die Kapillaren an Öffnung 2, 3 und 4 drucklos waren (siehe Abbildung 6). Unmittelbar danach wurde eine PVA-Lösung (450µL einer 3%igen wäßrigen PVA-Lösung mit 50 µl einer 1:1 mit H₂O verdünnten HCl gemischt), (PVA: MW ca. 90 000, 99+% hydrolysiert, Aldrich) mit 0,5 MPa für 10 Sekunden mittels der Kapillare in Öffnung 1 des Chips gedrückt. Beide Flüssigkeitspfropfen wurden anschließend mit 0,5 MPa weiter durch die Kanäle des Chips transportiert. Nach 1-2 Minuten hatten sie die mikrofluiden Kanäle des Chips über die Öffnungen 2, 3 und 4 verlassen. Danach wurden die Öffnungen 2, 3 und 4 mit 0,5 MPa Stickstoffdruck beaufschlagt während an Öffnung 1 entspannt wurde um die Kanäle mit Gas zu spülen. Die entstandene Schicht an den Oberflächen der Kanäle wurde so für 15 Minuten im Stickstoffstrom vorgetrocknet. Danach wurde zur beschleunigten Trocknung der Chip zusammen mit der Halterung und den Kapillaren in einen heizbaren Ofen (Gaschromatographen) eingebaut und die Kapillare an Öffnung 1 mit dem Injektor verbunden. Während man die Kanäle im Stickstoffstrom (0,15 - 0,20 MPa) spülte, wurde der Ofen von 40°C bis 80°C mit 6°C/min. aufgeheizt. Nach Abkühlen und Ausbau des Chips war er für den Gebrauch fertig. CE-Chips mit so beschichteten Mikrokanälen zeichneten sich durch einen unterdrückten elektroosmotischen Fluß in beiden der gekreuzten Kanäle aus.

### Beispiel 6:

### Belegung ausgewählter Mikrokanäle eines CE-Chips

Nach unserem Verfahren in Kombination mit dem in Beispiel 5 beschriebenen experimentellen Aufbau lassen sich auch einzelne ausgewählte Kanäle von Systemen mit mikrofluidischen Strukturen beschichten. So gelingt es bei einem CE-chip mit zwei gekreuzten Kanälen nur einen mit PVA zu belegen, während der andere unbeschichtet bleibt und daher nur dort ein starker EOF präsent ist.
Zur alleinigen Belegung des Hauptkanals (Kanal zwischen Öffnung 1 und 3, siehe Abb. 6) in dem die elektrophoretische Trennung stattfindet, während der kürzere Kanal für die Probenaufgabe unbelegt bleibt (Kanal zwischen Öffnung 2 und 4, siehe Abb. 6), wurde der Chip analog zu Beispiel 5 mit 4 Belegungsapparaturen verbunden und die Kanäle wurden vollständig mit Wasser gefüllt. Danach wurde eine Glutaraldehydlösung (200 µL einer 50%igen wäßrigen Lösung mit 300 µl einer 1:10 verdünnten konz. HCl gemischt) mit 0,5 MPa Stickstoff über eine fused silica Kapillare (Innendurchmesser 50 µm, Länge 30 cm), in die Öffnung 1 des Mikrochips gedrückt, während über die Kapillaren an Öffnung 2 und 4 Wasser mit einem Druck von 0,1 MPa zugeführt wurde, (siehe Abbildung 6). Nachdem die Glutaraldehydlösung an der Kapillare an Öffnung 3 austrat, wurde eine PVA-Lösung analog zu Beispiel 5, mit 0,5 MPa für 10 Sekunden über die Kapillare in Öffnung 1 des Chips gedrückt, während über Öffnung 2 und 4 wiederum mit Wasser gespült wurde. Der PVA-Flüssigkeitspfropfen wurde anschließend mit 0,5 MPa im Stickstoffstrom weiter durch den Hauptkanal des Chips transportiert. Nach 1-2 Minuten hatte er den Hauptkanal des Chips über die Kapillare an Öffnung 3 verlassen. Danach wurden die Öffnungen 2, 3, 4 mit 0,5 MPa Stickstoffdruck beaufschlagt während an Öffnung 1 entspannt wurde um die Kanäle mit Gas zu spülen. Die entstandene Schicht an den Oberflächen wurden danach wie in Beispiel 5 getrocknet.

CE-Chips mit einem so beschichteten Hauptkanal zeichneten sich dort durch einen unterdrückten elektroosmotischen Fluß aus, während ein starker kathodischer Fluß im Probenaufgabekanal vorhanden war.

## Patentansprüche

1. Verfahren zur Belegung der inneren Oberfläche von Kapillaren und Röhren mit einer chemisch vernetzten hydrophilen Polymerschichttung, **dadurch gekennzeichnet, dass** die Kapillaren bzw. Röhren nacheinander mit einem quervernetzenden Reagenz und einer Lösung des hydroxylischen Polymers gespült werden, wobei die eine Kapillare teilweise oder vollständig füllende Lösung des quervernetzenden Reagenzes mit einem Pfropfen des gelösten Polymers aus der Kapillare verdrängt wird.

2. Verfahren nach Ansprüche 1, wobei Reagenzlösung und Polymerlösung mittels Überdruck durch ein inertes Gas aus der Kapillare verdrängt werden.

3. Verfahren nach Anspruch 1 oder 2, wobei die entstandene hydrophile Polymerschicht im Gasstrom getrocknet wird.

4. Verfahren nach Anspruch 3, wobei die Kapillare zum beschleunigten Trocknen im Gasstrom erhitzt wird.

5. Verfahren nach Anspruch 2-4, wobei als Gas Stickstoff, Helium, Argon oder Wasserstoff eingesetzt wird.

6. Verfahren nach Anspruch 1-5 wobei als quervernetzendes Reagenz eine Verbindung mit ein oder mehreren Carbonylgruppen in Form von Ketonen oder Aldehyden eingesetzt werden.

7. Verfahren nach Anspruch 6, wobei als quervernetzendes Reagenz ein Dialdehyd eingesetzt wird.

8. Verfahren nach Anspruch 7, als Dialdehyd Glutaraldehyd einge- . setzt wird.

9. Verfahren nach Ansprüchen 1-8, wobei als Polymer eine Polyhydroxyverbindung eingesetzt wird.

10. Verfahren nach Anspruch 9, wobei als Polyhydroxyverbindung Polyvinylalkohol eingesetzt wird.

11. Verfahren nach Ansprüchen 1-10, wobei die Kapillaren oder Röhren . Bestandteile mikrofluidischer Strukturen sind.

12. Kapillaren, deren innere Oberflächen nach einem Verfahren der Ansprüche 1-11 mit einem quervernetzten hydroxylischen Polymer belegt sind.

13. Kapillaren nach Anspruch 12, die mit Polyvinylalkohol beschichtet sind.

14. Systeme mit mikrofluidischen Strukturen, **dadurch gekennzeichnet, daß** einzelne oder alle darin enthaltenen Mikrokanäle oder Kapillaren gemäß einem Verfahren nach Anspruch 1-11 mit einem quervernetzten hydroxylischen Polymer belegt sind.

15. Anwendung der Kapillaren oder Systeme gemäß Ansprüchen 12 bis 14 in elektromigrativen Trennverfahren und anderen Techniken unter Verwendung mikrofluidischer Systeme.

16. Anwendung der Kapillaren oder Systeme gemäß Ansprüchen 12-14 zur Dosierung flüssiger Proben z.B. für die chemische Analyse oder für mikrosynthetische Verfahren in der Chemie.

## Claims

1. A process for coating the inner surface of capillaries and tubes with a chemically cross-linked hydrophilic polymer layer, **characterized in that** the capillaries or tubes are successively rinsed with a cross-linking reagent and a solution of the hydroxylic polymer, wherein the solution of said cross-linking reagent which partially or completely fills a capillary is displaced from the capillary by a plug of the dissolved polymer.

2. The process according to claim 1, wherein the reagent solution and polymer solution are displaced from the capillary by overpressure using an inert gas.

3. The process according to claims 1 or 2, wherein the hydrophilic polymer layer formed is dried in a gas flow.

4. The process according to claim 3, wherein said capillary is heated in a gas flow for accelerated drying.

5. The process according to claims 2-4, wherein nitrogen, helium, argon or hydrogen is used as said gas. .

6. The process according to claims 1-5, wherein a compound having one or more carbonyl groups in the form of ketones or aldehydes is used as said cross-linking reagent.

7. The process according to claim 6, wherein a dialdehyde is used as said cross-linking reagent.

8. The process according to claim 7, wherein glutaraldehyde is used as said dialdehyde.

9. The process according to claims 1-8, wherein a polyhydroxy compound is used as said polymer.

10. The process according to claim 9, wherein polyvinyl alcohol is used as said polyhydroxy compound.

11. The process according to claims 1-10, wherein said capillaries or tubes are the components of microfluidic structures.

12. Capillaries having inner surfaces coated with a cross-linked hydroxylic polymer by the process according to claims 1-11.

13. The capillaries according to claim 12, which are coated with polyvinyl alcohol.

14. Systems having microfluidic structures, **characterized in that** some or all of the microchannels or capillaries contained therein are coated with a cross-linked hydroxylic polymer by the process according to claims 1-11..

15. Use of the capillaries or systems according to claims 12 to 14 in electromigrative separation methods and other techniques using microfluidic systems.

16. Use of the capillaries or systems according to claims 12 to 14 for the dosage of liquid samples, e.g., for chemical analysis or for microsynthetic methods in chemistry.

## Revendications

1. Procédé de revêtement de la surface interne de capillaires et tubes avec un revêtement polymère hydrophile réticulé chimiquement, **caractérisé en ce que** les capillaires ou tubes sont balayés successivement avec un réactif de réticulation et une solution du polymère hydroxylique, où la solution du réactif de réticulation, remplissant partiellement ou totalement un capillaire, est déplacée hors du capillaire par un bouchon du polymère dissout.

2. Procédé selon la revendication 1, dans lequel la solution de réactif et la solution du polymère sont déplacées hors du capillaire au moyen d'une surpression par un gaz inerte.

3. Procédé selon la revendication 1 ou 2, dans lequel la couche polymère hydrophile qui se forme est séchée dans un flux de gaz.

4. Procédé selon la revendication 3, dans lequel le capillaire est chauffé pour accélérer le séchage dans le flux de gaz.

5. Procédé selon l'une des revendications 2 à 4, dans lequel on utilise comme gaz de l'azote, de l'hélium, de l'argon ou de l'hydrogène.

6. Procédé selon l'une des revendications 1 à 5, dans lequel on utilise en tant que réactif de réticulation un composé présentant un ou plusieurs groupes carbonyle sous la forme de cétones ou d'aldéhydes.

7. Procédé selon la revendication 6, dans lequel on utilise en tant que réactif de réticulation un dialdéhyde.

8. Procédé selon la revendication 7, dans lequel on utilise en tant que dialdéhyde le glutaraldéhyde.

9. Procédé selon l'une des revendications 1 à 8, dans lequel on utilise en tant que polymère un composé polyhydroxylique.

10. Procédé selon la revendication 9, dans lequel on utilise en tant que composé polyhydroxylique un poly(alcool vinylique).

11. Procédé selon l'une des revendications 1 à 10, dans lequel les capillaires ou tubes sont des composantes de structures micro-fluidiques.

12. Capillaires dont les surfaces internes sont revêtues selon un procédé des revendications 1 à 11 avec un polymère hydroxylique réticulé.

13. Capillaires selon la revendication 12, qui sont revêtus avec un poly(alcool vinylique).

14. comportant des structures micro-fluidiques, **caractérisés en ce que** les différents micro-canaux ou capillaires qu'ils contiennent, ou tous ceux-ci, sont revêtus selon un procédé selon l'une des revendications 1 à il avec un polymère hydroxylique réticulé.

15. Utilisation des capillaires ou systèmes selon les revendications 12 à 14 dans des procédés de séparation par électromigration et d'autres techniques utilisant des systèmes micro-fluidiques.

16. Utilisation des capillaires ou systèmes selon les revendications 12 à 14 pour doser des échantillons liquides, par exemple pour l'analyse chimique ou pour des procédés de micro-synthèse utilisés en chimie.
